Europäisches Patentamt

European Patent Office

Office européen des brevets

(19)

(11) Veröffentlichungsnummer: **0 240 962**

**A1**

(12)

# EUROPÄISCHE PATENTANMELDUNG

(21) Anmeldenummer: **87105032.4**

(22) Anmeldetag: **04.04.87**

(51) Int. Cl.³: **E 04 B 1/343**

(30) Priorität: **05.04.86 DE 3611540**

(43) Veröffentlichungstag der Anmeldung:
**14.10.87 Patentblatt 87/42**

(84) Benannte Vertragsstaaten:
**AT BE CH DE ES FR GB GR IT LI NL SE**

(71) Anmelder: **Volksbank Remscheid eG
Tenter Weg 1-3
D-5630 Remscheid-Lennep(DE)**

(72) Erfinder: **Melchior, Bernd
Robbelshan 14
D-5630 Remscheid(DE)**

(74) Vertreter: **Patentanwaltsbüro Cohausz & Florack
Postfach 14 01 47
D-4000 Düsseldorf 1(DE)**

(54) **Transportierbarer Container.**

(57) Die Erfindung betrifft einen transportierbaren Container in Quaderform, der mindestens einen von Menschen betretbaren, Tür und Fenster aufweisenden Raum bildet, der für veschiedenste Zwecke, insbesondere als Werkstatt oder für medizinische Zwecke verwendbar ist. Zur elektrischen Versorgung der im Innern des Containers (1) befindlichen elektrischen Verbraucher sind auf dem Dach Solarzellen befestigt. Der erzeugte Strom ist durch Akkumulatoren speicherbar und bei zu großem Stromverbrauch, zu leeren Akkumulatoren und/oder zu geringer Stromerzeugung die weniger wichtigen Verbraucher durch eine elektrische Schalteinrichtung abschaltbar.

Fig.1

EP 0 240 962 A1

COHAUSZ & FLORACK
PATENTANWALTSBÜRO
SCHUMANNSTR. 97 D-4000 DÜSSELDORF 1
Telefon: (0211) 68 33 46 · Telefax: (0211) 67908 71 · Telex: 8586 513 cop d

PATENTANWÄLTE:
Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

- 1 -

03.04.1987
HC/Sr 46089EP B

Volksbank Remscheid eG

Tenter Weg 1 - 3

5630 Remscheid 11

Transportierbarer Container

Die Erfindung betrifft einen transportierbaren Container in Qauderform, der mindestens einen von Menschen betretbaren, Tür und Fenster aufweisenden Raum bildet, der für verschiedenste Zwecke, insbesondere als Werkstatt oder für medizinische Zwecke verwendbar ist.

Es ist bekannt, Container durch Lastkraftwagen zu transportieren und diese Container nicht nur zum Transport von Gegenständen, insbesondere Stückgut zu verwenden, sondern die Container auch so auszuführen, daß sie bewohnbar sind. Die Energieversorgung solcher Container geschah bisher entweder über eine Lichtmaschine des Lastkraftwagens oder aber durch ein von einem Dieselmotor angetriebenes Stromaggregat. Bei einsam gelegenen Häusern ist es darüberhinaus bekannt, bestimmte Geräte durch Solarzellen elektrisch zu versorgen. Diese Solarzellen reichten aber nicht aus, die gesamte Energieversorgung zu übernehmen, so daß zusätzliche Energiequellen, insbesondere Generatoren erforderlich waren.

Aufgabe der Erfindung ist es, einen transportierbaren Container der eingangs genannten Art zu schaffen, dessen Energieversorgung allein durch Solarzellen abgedeckt werden kann.

Diese Aufgabe wird erfindungsgemäß dadurch gelöst, daß zur elektrischen Versorgung der im Innern des Containers befindlichen elektrischen Verbraucher auf dem Dach Solarzellen befestigt sind, der erzeugte Strom durch Akkumulatoren speicherbar ist und bei zu großem Stromverbrauch, zu leeren Akkumulatoren und/oder zu geringer Stromerzeugung die weniger wichtigen Verbraucher durch eine elektrische Schalteinrichtung abschaltbar sind.

Durch auf diese Weise gesteuerte Verbraucher ist es möglich, die Energieversorgung allein durch Solarzellen zu gewährleisten. Zusätzliche Energiequellen, insbesondere in Form von Generatoren sind nicht erforderlich. Dies führt zu dem wesentlichen Vorteil, daß der Container völlig unabhängig von Benzin- oder Dieselöl als auch einem externen elektrischen Anschluß ist und somit insbesondere in Entwicklungsländern und unwirtlichen Gegenden jederzeit einsatzbereit ist. Der Energiebedarf kann dem Angebot an Sonnenenergie optimal angepaßt werden, so daß der Container in einem hohen Maße autark ist.

Vorzugsweise wird vorgeschlagen, daß weniger wichtige Verbraucher Außenbeleuchtung, Klimaanlage, Kochstellen und Bearbeitungsmaschinen sind, so daß diese Verbraucher zuerst abgeschaltet werden. Wichtige Verbraucher sind dagegen Notbeleuchtung und z. B. Kühlvorrichtungen für Medikamente, so daß diese Verbraucher ununterbrochen mit elektrischer Energie versorgt werden.

Eine Energieeinsparung im hohem Maße wird dann erreicht, wenn eine oder mehrere der folgenden Merkmale vorgesehen werden:

- es ist ein Mikroprozessor gesteuerter Laderegeler vorgesehen

- ein Wechselrichter wandelt den von den Solarzellen erzeugten Gleichstrom in Drehstrom

- der Wechselrichter schaltet sich bei fehlender Last selbständig ab

- die zu den Verbrauchern führenden Stromkreise sind so geschaltet, daß bei gleichzeitigem Einschalten von zwei oder mehreren Verbrauchern die Stromkreise nacheinander eingeschaltet werden

- während des Anlaufs eines Verbrauchers wird diesem geregelt weniger Strom zugeführt als dieser fordert

- alle Motoren der Verbraucher sind Drehstrommotoren

- zumindest die nur zeitweise benötigten Verbraucher weisen einen Zeitschalter auf, der nach einer bestimmten Einschaltdauer diesen Verbraucher abschaltet

- alle Verbraucher besitzen eine stromsparende Bauweise

- jeder Kühlschrank besitzt eine Stufen-Kompressor-Bauweise

- jeder Kühlschrank weist eine starke Isolierung auf

- die Lampen besitzen Leuchtstoffröhren.

- der Herd ist ein Mikrowellenherd.

Da es häufig nicht möglich ist, den Container mit seinen auf der Dachfläche angeordneten schrägstehenden Solarmodulen exakt zur Sonne auszurichten, weil dies nicht immer der Stellplatz oder die optimale Nutzung des Containers zuläßt wird vorgeschlagen, daß die in Modulbauweise angeordneten Sonnenzellen zur Sonne hin ausrichtbar sind. Eine besonders robuste und leicht handhabbare als auch flexible Anordnung wird dann geschaffen, wenn die Sonnenzellenmodule an mindestens zwei vorzugsweise vier Seiten anlenkbar und durch eine Zahnstange aufrichtbar sind. Vorzugsweise wird vorgeschlagen, daß die Sonnenzellenmodule im Dach versenkbar sind. Dies führt zu einer besonders geschützten Anordnung der Module während der Fahrt.

Um sicher zu stellen, daß innerhalb des Containers eine nicht zu hohe oder zu niedrige Temperatur besteht und die für das Kühlen oder Heizen des Containerinneren erforderliche Energie verhältnismäßig gering ist, werden die folgenden Konstruktionsmerkmale vorgeschlagen:

- die Außenwände des Containers sind stark isoliert und außen doppel hinterlüftet

- auf die Containeraußenwand ist ein hinterlüftetes Trapezblech oder Wellblech befestigt, auf dem im Abstand eine hinterlüftete Abdeckung mit reflektierender Außenseite befestigt ist

- die Außenflächen der Wände sind außen hoch reflektierend

- die Fenster sind stark isoliert und besitzen eine reflektierende Beschichtung oder Folie

- die Fenster sind außen durch eine oben waagerecht angelenkte Klappe abdeckbar, die aufstellbar ist

- die Eingangstür bildet eine Schleuse

- die Eingangstür ist selbsttätig schließend

- die Belüftung des Containers ist geregelt

- die Innenwände oder Innenwandbereiche weisen wärmespeichernde Platten oder Schichten, insbesondere aus Salzhydrat reziproken Salzpaaren oder einer Mischung aus Salzhydrat und Salz auf.

Besonders vorteilhaft ist es, wenn die Akkumulatoren, Laderegler und Wandler innerhalb des Containers, insbesondere in einem getrennten Raum angeordnet sind. Hierdurch sind diese Geräte geschützt und leicht erreichbar angeordnet, so daß ihre Wartung einfach durchgeführt werden kann. Auch wird vorgeschlagen, daß die zur Eingangstür führende Außentreppe nach innen einziehbar oder klappbar ist, so daß die Außentreppe während der Fahrt nicht beschädigt werden kann und schnell und mit wenig Handgriffen ausfahrbar ist.

Damit während der Fahrt, insbesondere über unebene Wege der Container und die im Container angeordneten Geräte und Vorrichtungen durch Stöße nicht beschädigt werden, wird vorgeschlagen, daß der Container, insbesondere der Containerboden am Fahrgestell, insbesondere an dessen Rahmen vibrationsdämpfend befestigt ist.

Ein Ausführungsbeispiel der Erfindung ist in den Zeichnungen dargestellt und wird im folgenden näher beschrieben. Es zeigen:

Fig. 1:   einen waagerechten Schnitt durch den erfindungsgemäßen Container ohne Darstellung der Zugmaschine,

Fig. 2:   einen senkrechten Schnitt durch den Container
nach II-II in Figur 1 und

Fig. 3:   einen waagerechten Schnitt durch die Außenwand
im Ausschnitt.

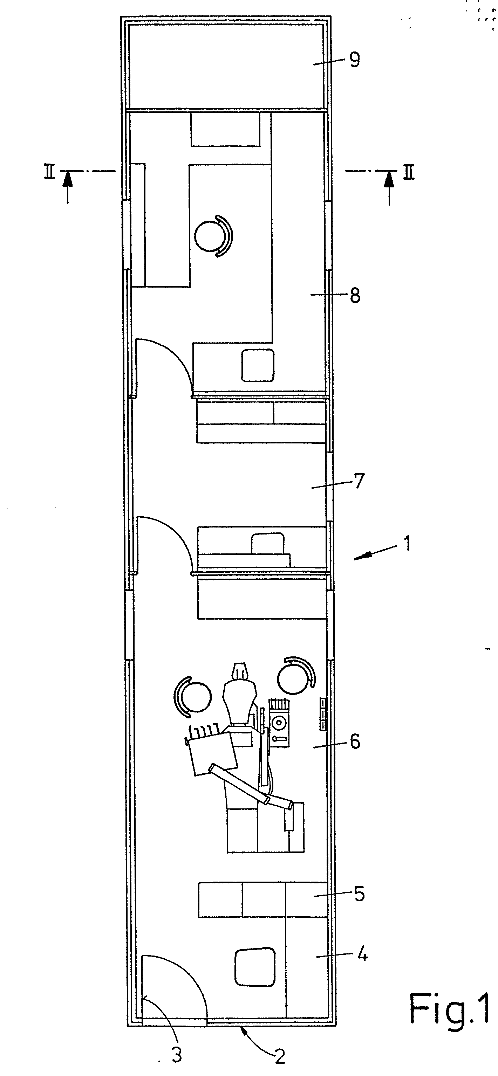

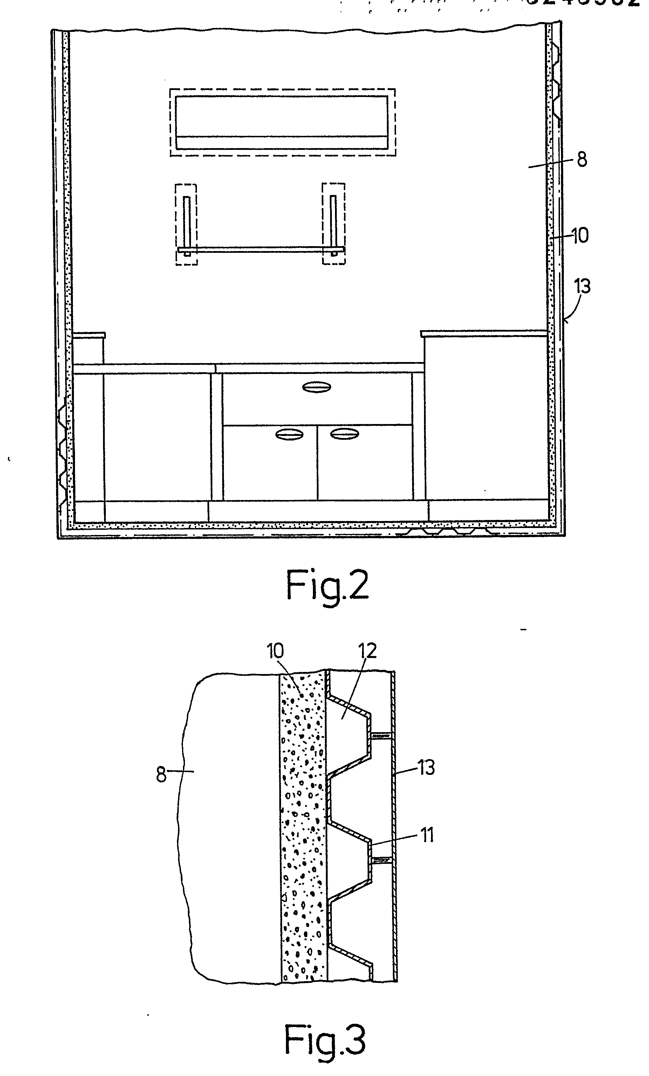

Der transportierbare Container 1 ist für die
unterschiedlichsten Bereiche einsetzbar. Besonders
vorteilhaft ist er als Werkstatt, zur medizinischen
Versorgung oder als Büro und/oder Wohnung verwendbar. In dem
in den Figuren 1 und 2 dargestellten Ausführungsbeispiel ist
der Container als Zahnarztpraxis eingerichtet. Der Container
weist an der rückwärtigen Stirnseite 2 eine Eingangstür 3
auf, die zu einem Vorraum 4 führt, der durch eine
Schrankwand 5 von einem zahnmedizinischen Behandlungsraum 6
getrennt ist. Im Behandlungsraum 6 steht ein
Behandlungsstuhl 7 mit den dazugehörigen Geräten. An dem
Behandlungsraum 6 schließt sich ein Vorbereitungsraum an,
der auch als Küche nutzbar ist und dahinter folgt ein
Laborraum 8. Im vordersten Bereich des Containers befindet
sich ein Maschinenraum 9, der die Akkumulatoren als auch den
Laderegler und einen Drehstrominverter enthält. Der Inverter
erzeugt einen Drei-Phasen-Sinus-Drehstrom, von dem auch ein
Wechselstrom abgreifbar ist. Dieser mikroprozessor-
gesteuerte Drehstrom-Inverter arbeitet in gleicher Weise
besonders energiesparend wie der mikroprozessor-gesteuerte
Laderegler.

Um in einem hohen Maße Energie einzusparen sind alle
Elektromotoren, insbesondere auch einer Werkstatt durch
Drehstrom angetrieben, so daß nur geringe Energieverluste
auftreten.

Da allein durch die auf dem Dach befindlichen Sonnenzellenmodule Energie erzeugt wird und damit das Energieangebot im Vergleich zu motorgetriebenen Generatoren gering ist sorgt ein mikroprozessor-gesteuertes Verbrauchermanagement dafür, daß die zu den Verbraucher führenden Einzelstromkreise nach Priorität geschaltet werden. Weniger wichtige Verbraucher wie Außenbeleuchtung, Aircondition oder bestimmte Maschinen und Geräte werden zuerst abgeschaltet und wichtige Verbraucher wie Notbeleuchtung, Kühlboxen für Medikamente oder bestimmte medizinische Geräte werden solang wie möglich mit elektrischer Engergie versorgt. Die Energieregelanlage besitzt somit eine Prioritätenliste nach der nach Bedeutung und Energieverbrauch bestimmte Verbraucher zuerst und andere zuletzt oder gar nicht abgeschaltet werden. Darüber hinaus sind folgende Konstruktions- und Steuerungsmerkmale vorgesehen um für einen extrem geringen Energieverbrauch zu sorgen:

- alle stärkeren Verbraucher, insbesondere Maschinen weisen Zeitschalter auf, die nach dem Einschalten des Verbrauchers nach kurzer Arbeitszeit den Verbraucher wieder ausschalten, so daß ein Verbraucher bei Nichtnutzung nicht versehentlich anbleibt;

- wird keine Energie verbraucht, schaltet sich der Inverter automatisch ab, so daß er keinen Eigenverbrauch bei Nichtnutzung hat. Sobald aber ein Verbrauch entsteht, schaltet sich der Inverter automatisch wieder ein;

- während des Anlaufs eines Verbrauchers, insbesondere eines Motors sorgt die mikroprozessor-gesteuerte Verbrauchermanagement-Regeleinrichtung, daß der Anlauf keine Hochlast erzeugt, sondern der Energieverbrauch langsam ansteigt;

- werden mehrer Geräte gleichzeitig eingeschaltet, so werden die Stromkreise nur nacheinander freigegeben bzw. eingeschaltet, so daß eine Überbelastung nicht entsteht;

- alle Beleuchtungskörper haben einen geringen Energieverbrauch und weisen insbesondere Leuchtstoff-Röhren geringer Wattzahl auf;

- eine evtl. eingebaute Airconditionanlage ist in Energie-Sparausführung aufgebaut und kommt mit sehr wenig Energie aus, da die weiter unten angeführten Merkmale des Containers für eine extrem hohe Dämmung sorgen;

- der Kühlschrank ist hoch isolierend ausgeführt und in Stufen-Kompressor-Technik.

Um die Klimatisierung des Containerinnenraums, insbesondere das Wärmen oder Kühlen mit geringstem Energieverbrauch zu ermöglichen bestehen folgende Merkmale:

- die Außenwände des Containers als auch Boden und Dach sind hochisolierend ausgeführt und insbesondere die Außenwände doppelt hinterlüftet. Hierzu ist, wie Figur 3 zeigt, auf die Wärmedämmschicht 10, insbesondere aus Styrophor außen ein Trapezblech 11 oder ein Wellblech befestigt, daß auf der Innenseite senkrechte Kanäle 12 bildet, die oben und unten offen sind, so daß Außenluft hindurchströmen kann. Auf das Trapezblech 11 ist im Abstand außen eine weitere Fläche 13 aus einem Blech, einer Spanplatte oder Kunststoff befestigt, so daß die Fläche 13 wiederum hinterlüftet ist. Die Fläche 13 weist außen einen hochreflektierenden Anstrich, insbesondere infrarotreflektierend auf, so daß auf die Außenfläche auftreffende Sonnenstrahlung nur zu einer geringen Erwärmung führt und diese Wärme auf der Rückseite durch die Hinterlüftung abgeführt wird.

- Die Fenster des Containers sind verhältnismäßig groß ausgeführt, so daß sehr viel natürliches Licht in das Innere des Containers gelangt und damit tagsüber eine energieverbrauchende Innenbeleuchtung nicht erforderlich ist. Die Verglasung der Fenster weist eine infrarot-reflektierende Beschichtung auf und insbesondere ist hierfür eine infrarot-reflektierende Folie zwischen den Glasscheiben befestigt und insbesondere verschiebbar angeordnet, so daß sie nach Bedarf herunter und heraufgefahren werden kann. An der Außenseite jedes Fensters ist eine Klappe um eine obere waagerechte Achse drehbar angelenkt, die zum Schutz des Fensters im heruntergeklappten Zustand das Fenster vollständig bedeckt und im hochgeklappten Zustand für eine Abschattung sorgt.

- Die Außentür weist einen automatischen Türschließer auf und es ist im Bereich der Außentür eine zweite Tür als Schleuse vorgesehen um nicht nur ein versehentliches Offenstehen der Tür zu vermeiden, sondern auch beim Hindurchgehen einen stärkeren Luftaustausch zu vermeiden.

- Die Innenwände des Containers können eine wärmespeichernde Schicht aufweisen, um insbesondere bei einer starken Abkühlung der Außentemperatur automatisch für ein Wärmen des Innenraums zu sorgen. Die wärmespeichernde Schicht besteht z.B. aus Salzhydrat reziproken Salzpaaren oder einer Mischung aus Salzhydrat und Salz.

Die rechteckigen plattenförmigen Solarzellenmodule weisen an zwei einander gegenüberliegenden Seiten oder aber an allen vier Seiten Achslagerstellen auf, so daß sie mit diesen Seiten am Dach wahlweise angelenkt werden können und damit in zwei oder vier Richtungen schräg aufstellbar sind. Zum Aufstellen der Module sind Zahnstangen vorgesehen, die beliebige Winkelstellungen der Module ermöglichen. Die Module brauchen während des Transports nicht abmontiert zu werden, sondern sind in der Dachfläche versenkbar.

Damit die von einer unebenen Fahrbahn erzeugten Stöße vom Chassis auf den Container nicht oder nur gemindert übertragen werden ist eine dämpfende Befestigung zwischen dem Chassis und dem Container vorgesehen.

**COHAUSZ & FLORACK**

PATENTANWALTSBÜRO

SCHUMANNSTR. 97  D-4000 DÜSSELDORF 1

Telefon: (0211) 683346 · Telefax: (0211) 6790871 · Telex: 8586513 cop d

0240962

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

03.04.1987

- 11 -

HC/Sr 46089EP C

## Ansprüche

1. Transportierbarer Container in Quaderform, der mindestens einen von Menschen betretbaren, Tür und Fenster aufweisenden Raum bildet, der für verschiedenste Zwecke, insbesondere als Werkstatt oder für medizinische Zwecke verwendbar ist,
d a d u r c h   g e k e n n z e i c h n e t , daß zur elektrischen Versorgung der im Innern des Containers (1) befindlichen elektrischen Verbraucher auf dem Dach Solarzellen befestigt sind, der erzeugte Strom durch Akkumulatoren speicherbar ist und bei zu großem Stromverbrauch, zu leeren Akkumulatoren und/oder zu geringer Stromerzeugung die weniger wichtigen Verbraucher durch eine elektrische Schalteinrichtung abschaltbar sind.

2. Container nach Anspruch 1,
d a d u r c h   g e k e n n z e i c h n e t , daß weniger wichtige Verbraucher Außenbeleuchtung, Klimaanlage, Kochstellen und Bearbeitungsmaschinen sind.

3. Container nach einem der vorherigen Ansprüche,
d a d u r c h   g e k e n n z e i c h n e t , daß wichtige Verbraucher Notbeleuchtung und Kühlvorrichtungen insbesondere für Medikamente sind.

4. Container nach einem der vorherigen Ansprüche, dadurch gekennzeichnet, daß ein durch Mikroprozessoren gesteuerter Laderegler vorgesehen ist.

5. Container nach einem der vorherigen Ansprüche, dadurch gekennzeichnet, daß ein Wechselrichter den von den Solarzellen erzeugten Gleichstrom in Drehstrom wandelt.

6. Container nach Anspruch 5, dadurch gekennzeichnet, daß der Wechselrichter bei fehlender Last sich selbständig abschaltet.

7. Container nach einem der vorherigen Ansprüche, dadurch gekennzeichnet, daß die zu den Verbrauchern führenden Stromkreise so geschaltet sind, daß bei gleichzeitigem Einschalten von zwei oder mehreren Verbrauchern die Stromkreise nacheinander eingeschaltet werden.

8. Container nach einem der vorherigen Ansprüche, dadurch gekennzeichnet, daß während des Anlaufs eines Verbrauchers diesem geregelt weniger Strom zugeführt wird als dieser fordert.

9. Container nach einem der vorherigen Ansprüche, dadurch gekennzeichnet, daß alle Motoren der Verbraucher Drehstrommotoren sind.

10. Container nach einem der vorherigen Ansprüche, dadurch gekennzeichnet, daß zumindest die nur zeitweise benötigten Verbraucher einen Zeitschalter aufweisen, der nach einer bestimmten Einschaltdauer diesen Verbraucher abschaltet.

11. Container nach einem der vorherigen Ansprüche,
    d a d u r c h   g e k e n n z e i c h n e t , daß alle
    Verbraucher eine stromsparende Bauweise besitzen.

12. Container nach Anspruch 11,
    d a d u r c h   g e k e n n z e i c h n e t , daß jeder
    Kühlschrank eine Stufen-Kompressor-Bauweise besitzt.

13. Container nach Anspruch 11 oder 12,
    d a d u r c h   g e k e n n z e i c h n e t , daß jeder
    Kühlschrank eine starke Isolierung aufweist.

14. Container nach einem der vorherigen Ansprüche,
    d a d u r c h   g e k e n n z e i c h n e t , daß die
    Lampen Leuchtstoffröhren besitzen.

15. Container nach einem der vorherigen Ansprüche,
    d a d u r c h   g e k e n n z e i c h n e t , daß der
    Herd ein Mikrowellenherd ist.

16. Container nach einem der vorherigen Ansprüche,
    d a d u r c h   g e k e n n z e i c h n e t , daß die
    in Modulbauweise angeordneten Sonnenzellen zur Sonne
    hin ausrichtbar sind.

17. Container nach Anspruch 16,
    d a d u r c h   g e k e n n z e i c h n e t , daß die
    Sonnenzellenmodule an mindestens zwei vorzugsweise
    vier Seiten anlenkbar und durch eine Zahnstange
    aufrichtbar ist.

18. Container nach Anspruch 16 oder 17,
    d a d u r c h   g e k e n n z e i c h n e t , daß die
    Sonnenzellenmodule im Dach versenkbar sind.

19. Container nach einem der vorherigen Ansprüche, d a d u r c h  g e k e n n z e i c h n e t , daß die Außenwände des Containers stark isoliert und außen doppelt hinterlüftet sind.

20. Container nach Anspruch 19, d a d u r c h  g e k e n n z e i c h n e t , daß auf die Containeraußenwand ein hinterlüftetes Trapezblech (11) oder Wellblech befestigt ist, auf dem im Abstand eine hinterlüftete Abdeckung (13) mit reflektierender Außenseite befestigt ist.

21. Container nach einem der vorherigen Ansprüche, d a d u r c h  g e k e n n z e i c h n e t , daß die Außenflächen der Wände außen hoch reflektierend sind.

22. Container nach einem der vorherigen Ansprüche, d a d u r c h  g e k e n n z e i c h n e t , daß die Fenster stark isoliert sind und eine reflektierende Beschichtung oder Folie besitzen.

23. Container nach einem der vorherigen Ansprüche, d a d u r c h  g e k e n n z e i c h n e t , daß die Fenster außen durch eine oben waagerecht angelenkte Klappe abdeckbar sind, die aufstellbar ist.

24. Container nach einem der vorherigen Ansprüche, d a d u r c h  g e k e n n z e i c h n e t , daß die Eingangstür (3) eine Schleuse bildet.

25. Container nach einem der vorherigen Ansprüche, d a d u r c h  g e k e n n z e i c h n e t , daß die Eingangstür (3) selbsttätig schließend ist.

26. Container nach einem der vorherigen Ansprüche, d a d u r c h  g e k e n n z e i c h n e t , daß die

Belüftung des Containers (1) geregelt ist.

27. Container nach einem der vorherigen Ansprüche, d a d u r c h   g e k e n n z e i c h n e t , daß die Innenwände oder Innenwandbereiche wärmespeichernde Platten oder Schichten, insbesondere aus Salzhydrat reziproken Salzpaaren oder einer Mischung aus Salzhydrat und Salz aufweisen.

28. Container nach einem der vorherigen Ansprüche, d a d u r c h   g e k e n n z e i c h n e t , daß die Akkumulatoren, Laderegler und Wandler innerhalb des Containers, insbesondere in einem getrennten Raum angeordnet sind.

29. Container nach einem der vorherigen Ansprüche, d a d u r c h   g e k e n n z e i c h n e t , daß die zur Eingangstür (1) führende Außentreppe nach innen einziehbar oder klappbar ist.

30. Container nach einem der vorherigen Ansprüche, d a d u r c h   g e k e n n z e i c h n e t , daß der Container (1), insbesondere der Containerboden am Fahrgestell, insbesondere an dessen Rahmen vibrationsdämpfend befestigt ist.

Fig.1

Fig.2

Fig.3

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 550 262  (COUEGNAS)<br>* Insgesamt *<br>--- | 1 | E 04 B  1/343 |
| A | DE-A-3 241 242  (ALFKO)<br>* Insgesamt *<br>--- | 1 | |
| A | FR-A-2 470 209  (FEROUX)<br>* Seite 1, Zeile 25  -  Seite  2, Zeile 1; Seite 4, Zeilen 20-27 *<br><br>----- | 1 | |

| RECHERCHIERTE SACHGEBIETE (Int. Cl.4) |
|---|
| E 04 B |

Der vorliegende Recherchenbericht wurde für alle Patentansprüche erstellt.

| Recherchenort<br>DEN HAAG | Abschlußdatum der Recherche<br>30-06-1987 | Prüfer<br>LAUE F.M. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

L